(19)

Europäisches Patentamt
European Patent Office
Office européen des brevets

(11) **EP 2 784 537 B1**

(12) **EUROPEAN PATENT SPECIFICATION**

(45) Date of publication and mention
of the grant of the patent:
**19.10.2016  Bulletin 2016/42**

(51) Int Cl.:
***G01S 13/90*** *(2006.01)*

(21) Application number: **14162311.6**

(22) Date of filing: **28.03.2014**

(54) **Inversion method and apparatus based on polarimetric interferometric synthetic aperture radar**

Umkehrverfahren und Vorrichtung basierend auf einem polarimetrischen interferometrischen Radar mit synthetischer Apertur

Appareil et procédé d'inversion à base de radar à ouverture synthétique interférométrique polarimétrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2013  CN 201310180311**

(43) Date of publication of application:
**01.10.2014  Bulletin 2014/40**

(73) Proprietor: **Institute of Electronics, Chinese
Academy of
Sciences
Beijing 100190 (CN)**

(72) Inventors:
  • **Deng, Yunkai**
    **100190 Beijing (CN)**
  • **Xu, Liying**
    **100190 Beijing (CN)**
  • **Wang, Yu**
    **100190 Beijing (CN)**
  • **Wang, Chunle**
    **100190 Beijing (CN)**
  • **Yu, Weidong**
    **100190 Beijing (CN)**
  • **Zhang, Zhimin**
    **100190 Beijing (CN)**

  • **Zhao, Fengjun**
    **100190 Beijing (CN)**
  • **Ni, Jiang**
    **100190 Beijing (CN)**

(74) Representative: **Gulde & Partner
Patent- und Rechtsanwaltskanzlei mbB
Wallstraße 58/59
10179 Berlin (DE)**

(56) References cited:
**WO-A1-2011/154804**

  • **LULU TAN ET AL: "Improved three-stage
    inversion process for forest height inversion with
    PolInSAR data", RADAR (RADAR), 2011 IEEE CIE
    INTERNATIONAL CONFERENCE ON, IEEE, 24
    October 2011 (2011-10-24), pages 1394-1397,
    XP032124127, DOI:
    10.1109/CIE-RADAR.2011.6159819 ISBN:
    978-1-4244-8444-7**
  • **CLOUDE S R ET AL: "Three-stage inversion
    process for polarimetric SAR interferometry -
    Advances in synthetic aperture radar", IEE
    PROCEEDINGS: RADAR, SONAR &
    NAVIGATION, INSTITUTION OF ELECTRICAL
    ENGINEERS, GB, vol. 150, no. 3, 2 June 2003
    (2003-06-02), pages 125-134, XP006020590, ISSN:
    1350-2395, DOI: 10.1049/IP-RSN:20030449**

EP 2 784 537 B1

**Description**

**TECHNICAL FIELD**

The disclosure relates generally to the application technology of Polarimetric Interferometric Synthetic Aperture Radar (PoLInSAR), and in particular to an inversion method and apparatus based on the PoLInSAR.

**BACKGROUND**

In recent years, inversing forest parameters using PoLInSAR data has been a hot topic. A conventional forest parameter inversion method is a conventional three-stage inversion method proposed by scholars Cloude and Pathanassiou, which is based on an RVOG two-layer vegetation model and divides an inversion process into three steps including: correlation coefficient estimation and line fitting, ground surface phase estimation, and volume scattering decorrelation estimation and parameter estimation. A line fitting error and a volume scattering decorrelation estimation error greatly influence inversion precision.

During the line fitting of the correlation coefficients, the line fitting error may directly influence the precision of the ground surface phase estimation, and the ground surface phase error directly influences tree height inversion results, thus, the line fitting is a basic step of the three-stage inversion method, and the line fitting error is required to be minimized. At present, the line fitting method generally adopts least squares. The line fitting method adopting the least squares is simple, but there is a defect that only an independent variable error is considered and no dependent variable error is considered, which results in an error in the fitting.

Theoretically, the volume scattering decorrelation coefficient is a point on a visual line segment of the fitted line which is farthest away from a ground surface phase point. The conventional volume scattering decorrelation coefficient may be approximated to an HV channel correlation coefficient, which however may result in an underestimation of the forest height.

LULU TAN ET AL: "Improved three-stage inversion process for forest height inversion with PolInSAR data",RADAR (RADAR), 2011 IEEE CIE INTERNATIONAL CONFERENCE ON, IEEE, 24 October 2011 (2011-10-24), pages 1394-1397, XP032124127, discloses an improved three-stage inversion process wherein coherence estimation is performed by adaptive averaging.

SUMMARY

In view of the above, the disclosure provides an inversion method and apparatus based on PoLInSAR, which can improve inversion precision.

To this end, technical solutions of the disclosure are provided as follows.

An inversion method based on PoLInSAR, which includes:

a set of PoLInSAR image data of an object to be measured is acquired, and line fitting is performed, by using total least squares, on a correlation coefficient estimation value acquired from the PoLInSAR image data to determine a ground surface phase estimation value of the object to be measured;
a volume scattering decorrelation coefficient is acquired through a correlation regional boundary acquired from the PoLInSAR image data and a fitted line; and
inversion is performed on the object to be measured by establishing a lookup table to acquire an inversion parameter of the object to be measured as a parameter estimation value of the object to be measured;
the PoLInSAR image data includes four master images and four slave images.

Preferably, the step that line fitting is performed, by using total least squares, on a correlation coefficient estimation value acquired from the PoLInSAR image data to determine a ground surface phase estimation value of the object to be measured may include:

line fitting is performed on the correlation coefficient estimation value by using the total least squares to determine a slope estimation value and a slant range estimation value of the fitted line, and the ground surface phase estimation value of the object to be measured is determined according to the slope estimation value and the slant range estimation value.

Preferably, the step that a volume scattering decorrelation coefficient is acquired through a correlation regional boundary acquired from the PoLInSAR image data and a fitted line may include:

a correlation regional boundary of the master images and the slave images is determined;

two intersection points of the fitted line and the correlation regional boundary are determined, and one of the two intersection points which is farther away from the ground surface phase of the object to be measured is determined as a volume scattering decorrelation coefficient.

Preferably, the step that a correlation regional boundary of the master images and the slave images is determined may include:

a multiple correlation coefficient of the master images and the slave images is determined according to a scattering mechanism of the master images and the slave images, a polarimetric cross-correlation matrix of the master images and the slave images, and a correlation matrix of the master images and a correlation matrix of the slave images, and the multiple correlation coefficient is corrected;

a correlation regional boundary is determined through a phase rotation method according to a corrected result of the multiple correlation coefficient.

Preferably, the step that two intersection points of the fitted line and the correlation regional boundary are determined may include:

an objective function of the object to be measured is established according to a scattering mechanism of the master images and the slave images, a polarimetric cross-correlation matrix of the master images and the slave images, and a correlation matrix of the master images and a correlation matrix of the slave images, and extreme values of the objective function are determined through a Lagrange multiplier method, the extreme values of the objective function are taken as two intersection points of the fitted line and the correlation regional boundary.

An apparatus based on PoLInSAR is provided, which includes a ground surface phase determining module, a volume scattering decorrelation coefficient determining module and a parameter determining module.
The ground surface phase determining module is configured to: acquire a set of PoLInSAR image data of an object to be measured, and perform line fitting, by using total least squares, on a correlation coefficient estimation value acquired from the PoLInSAR image data to determine a ground surface phase estimation value of the object to be measured;
the volume scattering decorrelation coefficient determining module is configured to acquire a volume scattering decorrelation coefficient through a correlation regional boundary acquired from the PoLInSAR image data and a fitted line; and
the parameter determining module is configured to perform inversion on the object to be measured by establishing a lookup table to acquire an inversion parameter of the object to be measured as a parameter estimation value of the object to be measured.
Preferably, the ground surface phase determining module may be further configured to:

perform line fitting on the correlation coefficient estimation value by using the total least squares to determine a slope estimation value and a slant range estimation value of the fitted line, and determine the ground surface phase estimation value of the object to be measured according to the slope estimation value and the slant range estimation value;

the PoLInSAR image data includes four master images and four slave images.

Preferably, the volume scattering decorrelation coefficient determining module may be further configured to:

determine a correlation regional boundary of the master images and the slave images;

determine two intersection points of the fitted line and the correlation regional boundary; and

determine one of the two intersection points which is farther away from the ground surface phase of the object to be measured as a volume scattering decorrelation coefficient.

Preferably, the volume scattering decorrelation coefficient determining module may be further configured to:

determine a multiple correlation coefficient of the master images and the slave images according to a scattering mechanism of the master images and the slave images, a polarimetric cross-correlation matrix of the master images and the slave images, and a correlation matrix of the master images and a correlation matrix of the slave images, and correct the multiple correlation coefficient;

determine a correlation regional boundary through a phase rotation method according to a corrected result of the multiple correlation coefficient.

Preferably, the parameter determining module may be further configured to: establish an objective function of the object to be measured, according to a scattering mechanism of the master images and the slave images, a polarimetric cross-correlation matrix of the master images and the slave images, and a correlation matrix of the master images and a correlation matrix of the slave images, determine extreme values of the objective function through a Lagrange multiplier method, and take the extreme values of the objective function as two intersection points of the fitted line and the correlation regional boundary.

According to the inversion method and apparatus based on the PoLInSAR, a set of PoLInSAR image data of an object to be measured is acquired, line fitting is performed, by using total least squares, on a correlation coefficient estimation value acquired from the PoLInSAR image data to determine a ground surface phase estimation value of the object to be measured; a volume scattering decorrelation coefficient is acquired through the correlation regional boundary acquired from the PoLInSAR image data and the fitted line; inversion is performed on the object to be measured by establishing a lookup table to acquire an inversion parameter of the object to be measured as a parameter estimation value of the object to be measured. Thus, the method and apparatus of the disclosure can reduce line fitting error effectively, estimate a volume scattering decorrelation coefficient precisely and then obtain a more precise forest parameter, and accordingly improve the inversion precision of the forest parameter. In addition, the method provided by the disclosure is simple and practicable, and especially applicable to the inversion of forest parameters, an inversion result of tree height can be much closer to the actual height, which is more favourable to a practical application of a remote sensing image. Furthermore, the method provided by the disclosure is simple and practicable, and can perform precise inversion on a crop parameter.

## BRIEF DESCRIPTION OF THE DRAWINGS

Fig. 1 is a flow diagram of an inversion method based on PoLInSAR according to the disclosure;

Fig. 2 is a schematic diagram of volume scattering decorrelation estimation according to the disclosure;

Fig. 3 is a block diagram of an inversion apparatus based on PoLInSAR according to the disclosure;

Figs. 4(a) and 4(b) are schematic diagrams of simulation experiment data according to an embodiment of the disclosure;

Figs. 5(a) and 5(b) are ground surface phase diagrams acquired respectively by using the method of the disclosure and by using a conventional three-stage inversion method according to an embodiment of the disclosure;

Fig. 6 is a comparison schematic diagram of a volume scattering decorrelation coefficient estimated respectively by using the method of the disclosure and by using the conventional three-stage inversion method according to an embodiment of the disclosure;

Figs. 7(a) and 7(b) are comparison schematic diagrams of results of tree height inversion performed respectively by using the method of the disclosure and by using the conventional three-stage inversion method according to an embodiment of the disclosure;

Fig. 8 is a comparison schematic diagram of results of tree height inversion performed on a scenario azimuth centreline respectively by using the method of the disclosure and by using the conventional three-stage inversion method; and

Fig. 9 is a comparison schematic diagram of results of tree height inversion performed on whole scenario respectively by using the method of the disclosure and by using the conventional three-stage inversion method.

**DETAILED DESCRIPTION**

Technical solutions of the disclosure are further elaborated in conjunction with accompanying drawings and specific embodiments.

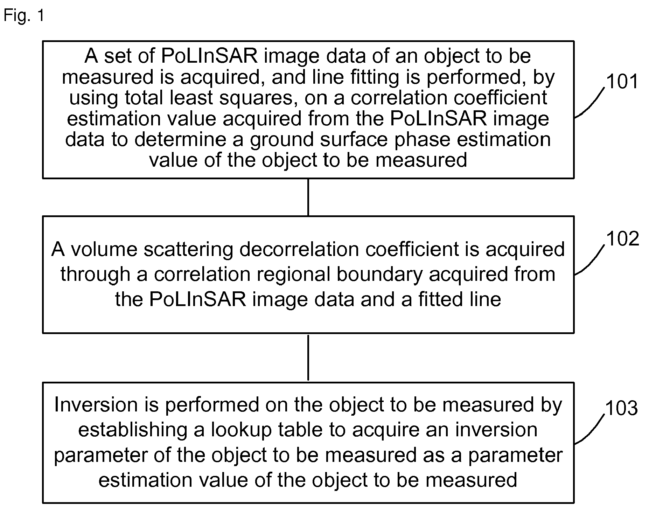

Fig. 1 is a flow diagram of an inversion method based on PoLInSAR according to the disclosure. As shown in Fig. 1, the inversion method may include steps 101, 102 and 103.

In step 101, a set of PoLInSAR image data of an object to be measured is acquired, and line fitting is performed, by using total least squares, on a correlation coefficient estimation value acquired from the PoLInSAR image data to determine a ground surface phase estimation value of the object to be measured.

The PoLInSAR image data may include four master images and four slave images.

Specifically, under a polarimetric interferometry condition, polarimetric data of the same object to be measured is acquired by two antennas. A first antenna of the two antennas acquires master image data corresponding to an HH channel, an HV channel, a VH channel and a VV channel respectively, i.e., four master images; a second antenna of the two antennas acquires slave image data corresponding to the HH channel, the HV channel, the VH channel and the VV channel respectively, i.e., four slave images.

Specifically, the step that line fitting is performed, by using total least squares, on a correlation coefficient estimation value acquired from the PoLInSAR image data to determine a ground surface phase estimation value of the object to be measured may include:

line fitting is performed on the correlation coefficient estimation value by using the total least squares to determine a slope estimation value and a slant range estimation value of the fitted line, and the ground surface phase estimation value of the object to be measured is determined according to the slope estimation value and the slant range estimation value.

The correlation coefficient estimation value may include: an HV channel correlation coefficient, an HH channel correlation coefficient, a VV channel correlation coefficient, an RL channel correlation coefficient, an LL channel correlation coefficient, an LR channel correlation coefficient, a ZU channel 1 correlation coefficient, a ZU channel 2 correlation coefficient, and a ZU channel 3 correlation coefficient.

The implementation principle and steps of the line fitting performed by using the total least squares are elaborated below:

A linear equation may be set to be:

$$ y + v_{yi} = a(x + v_{xi}) + b \tag{1} $$

where x and y are observed quantities of correlation coefficients, and in which there exists errors $v_{xi}$ and $v_{yi}$, a and b are parameters to be estimated, and a represents a slope while b represents a slant range. The equation (1) is transformed into a matrix form as the form of equation (2);

$$ (A + E_A)x = Y + E_Y \tag{2} $$

where,

$$ A = \begin{bmatrix} x_1 & 1 \\ x_2 & 1 \\ \vdots \\ x_n & 1 \end{bmatrix}, \quad E_A = \begin{bmatrix} v_{x_1} & 0 \\ v_{x_2} & 0 \\ \vdots \\ v_{x_n} & 0 \end{bmatrix}, \quad x = \begin{bmatrix} a \\ b \end{bmatrix}, \quad Y = \begin{bmatrix} y_1 \\ y_2 \\ \vdots \\ y_n \end{bmatrix}, \quad E_Y = \begin{bmatrix} v_{y_1} \\ v_{y_2} \\ \vdots \\ v_{y_n} \end{bmatrix}, $$

Or the equation (1) may be transformed into a matrix form as the form $(B+D)z=0$ through an equivalent transformation, where an augmented matrix B is $B=[-Y, A]$, a perturbation matrix D is $D=[-E_Y+E_A]$, solutions of a homogeneous equation are determined by using total least squares, and this is equivalent to determine a constrained optimization

$$\min_{D,x} \|D\|_F^2 \ .$$

Specifically, the step that the line fitting is performed by using the least squares may include:

Singular Value Decomposition (SVD) is performed on the augmented matrix B to obtain:

$$B = U \begin{bmatrix} \sigma_1 & & & 0 \\ & \sigma_2 & & \\ & & \ddots & \\ 0 & & & \sigma_{n+1} \end{bmatrix} V^H \ ,$$

where a matrix $V$ is $V=[v_1, v_2, \ldots v_{n+1}]$, and n+1 eigenvectors of $V$ correspond to n+1 eigenvalues respectively; A formula $\sigma_p > \sigma_{n+1} + \varepsilon \gtrsim \sigma_{p+1} \geq \cdots \sigma_{n+1}$ is utilized to determine a number P of the main singular values.

Assume $V_1 = [v_{p+1}, v_{p+2}, \cdots v_{n+1}] = \begin{bmatrix} \overline{v_1} \\ \overline{V} \end{bmatrix}$, where $\overline{v_1}$ is the first row vector of $V_1$, a total least squares solution is determined to be $x_{TLS} = \dfrac{\overline{V}v_1^H}{v_1 v_1^H}$ through tedious calculation, that is, a slope a and slant range b of a line are determined, and then a fitted line is acquired.

After a slope a and slant range b of a fitted line is determined, a ground surface phase estimation value of an object to be measured can be obtained according to a computing method of ground surface phase in the conventional three-stage inversion method proposed by scholar Cloude et al.

The fitted line intersects with a unit circle at two intersection points, distance between each intersection point and the HV channel and distance between each intersection point and the (HV+VV) channel are calculated, and the intersection point with the distance to the HV channel greater than the distance to the (HV+VV) channel is determined as a ground surface phase estimation value of the object to be measured.

In step 102, a volume scattering decorrelation coefficient is acquired through a correlation regional boundary acquired from the PoLInSAR image data and the fitted line.

Specifically, the step that a volume scattering decorrelation coefficient is acquired through a correlation regional boundary acquired from the PoLInSAR image data and the fitted line may include:

a correlation regional boundary of the master images and the slave images is determined;

two intersection points of the fitted line and the correlation regional boundary are determined, and one of the two intersection points which is farther away from the ground surface phase of the object to be measured is determined as a volume scattering decorrelation coefficient.

Specifically, the step that a correlation regional boundary of the master image and the slave image is determined may include:

a multiple correlation coefficient of the master images and the slave images is determined according to a scattering mechanism of the master images and the slave images, a polarimetric cross-correlation matrix of the master images and the slave images, and a correlation matrix of the master images and a correlation matrix of the slave images;

the multiple correlation coefficient of the master images and the slave images is then corrected;
a correlation regional boundary is determined through a phase rotation method according to a corrected result of the multiple correlation coefficient.

Specifically, the step that two intersection points of the fitted line and the correlation regional boundary are determined may include:

an objective function of the object to be measured is established according to the scattering mechanism of the master images and the slave images, the polarimetric cross-correlation matrix of the master images and the slave images, and the correlation matrix of the master images and the correlation matrix of the slave images; extreme values of the objective function is determined through a Lagrange multiplier method, and the extreme values of the objective function are taken as two intersection points of the fitted line and the correlation regional boundary.

In a practical application, the correlation region refers to distribution region of all multiple correlation coefficients in a complex plane, a shape of which is usually described with a correlation regional boundary. In the disclosure, one of the two intersection points of the fitted line and the correlation regional boundary which is farther away from the ground surface phase is defined as a volume scattering decorrelation coefficient.

The principle of determining the correlation regional boundary is elaborated below.

When main and slave channels have the same polarimetric mode, the multiple correlation coefficient under any scattering base is defined as:

$$\gamma = \frac{\omega^{\mathrm{H}}\mathbf{\Omega}_{12}\omega}{\sqrt{\omega^{\mathrm{H}}\mathbf{T}_{11}\omega \cdot \omega^{\mathrm{H}}\mathbf{T}_{22}\omega}} \qquad (3)$$

where $\omega$ is a scattering mechanism of the master image and the slave image, $\Omega_{12}$ is a polarimetric cross-correlation matrix of the master image and the slave image, $\mathbf{T}_{11}$ and $\mathbf{T}_{22}$ are the correlation matrices of the master image and the slave image respectively. To simplify calculation, the correlation coefficient can be corrected as:

$$\tilde{\gamma} = \frac{\omega^{\mathrm{H}}\mathbf{\Omega}_{12}\omega}{\omega^{\mathrm{H}}\mathbf{T}\omega} \qquad (4)$$

where $\mathbf{T}=(\mathbf{T}_{11}+\mathbf{T}_{22})/2$, in a practical deterministic process, to determine the correlation regional boundary is to determine an extreme value of an equation (5):

$$\mathrm{Re}(\tilde{\gamma}\exp(j\phi_0)) = \frac{\omega^{\mathrm{H}}\mathbf{A}\omega}{\omega^{\mathrm{H}}\mathbf{T}\omega} \qquad (5)$$

where $\mathbf{A} = (e^{j\phi_0}\mathbf{\Omega}_{12} + e^{-j\phi_0}\mathbf{\Omega}_{12}^{\mathrm{H}})/2$, a value range of a ground surface phase $\phi_0$ is $[0, \pi)$, $\phi_0$ is an angle value of equal interval sampling in the range $[0, \pi)$. Since each angle can produce a pair of correlation regional boundary points corresponding to the ground surface phase, density of the correlation regional boundary is decided by the sampling interval. The more densely the phase is sampled, the more precise the obtained correlation regional boundary is, nonetheless, the lower calculation efficiency is.

An extreme value of equation (5) can be determined by utilizing the Lagrange multiplier method, a complex Lagrange function is set to be:

$$L = \omega^{\mathrm{H}}\mathbf{A}\omega + \lambda(\omega^{\mathrm{H}}\mathbf{T}\omega - C_1) \qquad (6)$$

when $\dfrac{\partial L}{\partial \omega^{\mathrm{H}}} = 0$ , then:

$$-\mathbf{T}^{-1}\mathbf{A}\omega = \lambda\omega \qquad (7)$$

where $\lambda$ is a predetermined extreme value and $C_1$ is a constant.

An eigen-decomposition is performed on the matrix $-\mathbf{T}^{-1}\mathbf{A}$ to obtain eigenvectors $\omega_1$ and $\omega_2$ corresponding to a maximum eigenvalue and a minimum eigenvalue respectively, and a pair of boundary points of the corresponding correlation region is:

$$\gamma_1 = \frac{\omega_1^{\mathrm{H}}\boldsymbol{\Omega}_{12}\omega_1}{\omega_1^{\mathrm{H}}\mathbf{T}\omega_1}, \gamma_2 = \frac{\omega_2^{\mathrm{H}}\boldsymbol{\Omega}_{12}\omega_2}{\omega_2^{\mathrm{H}}\mathbf{T}\omega_2} \qquad (8)$$

The correlation regional boundary points can be calculated by rotating $\phi_0$, and the correlation regional boundary has two intersection points with the fitted line obtained in step 101, and one of the two intersection points which is farther away from the ground surface phase is taken as a volume scattering decorrelation coefficient.

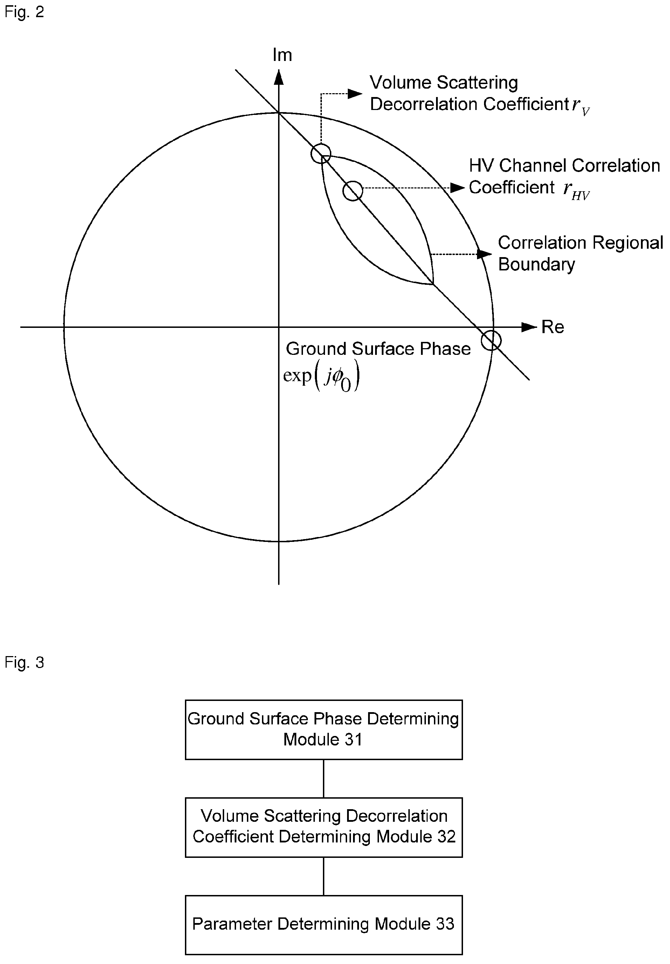

In the conventional three-stage inversion method, an HV channel correlation coefficient is usually taken as a volume scattering decorrelation coefficient, which however may cause underestimation of the parametric inversion. Fig. 2 is a schematic diagram of volume scattering decorrelation coefficients determined respectively by the method of the disclosure and by the conventional three-stage inversion method for the same object to be measured. Fig. 2 shows that, the volume scattering decorrelation coefficient determined by method of the disclosure is greater than that determined by the conventional three-stage inversion method. Proved by experiments that the method for determining the volume scattering decorrelation coefficient according to the disclosure can overcome, to some extent, the problem of underestimation of the parametric inversion caused by the conventional three-stage inversion method.

In step 103, inversion is performed on the object to be measured by establishing a lookup table to obtain an inversion parameter of the object to be measured as a parameter estimation value of the object to be measured.

A process of performing parameter estimation by establishing a lookup table is the same as that in the conventional three-stage inversion method.

For example, taking a forest as the object to be measured: equal interval sampling is performed on tree height from 0 to 30m and a volume scattering decorrelation coefficient is calculated in an ideal condition, a two-dimensional lookup table is established with the equal interval sampling tree height and the calculated volume scattering decorrelation coefficient to perform the parameter estimation, i.e., estimation of forest height of the object to be measured is finished.

Fig. 3 is a block diagram of an inversion apparatus based on PoLInSAR according to the disclosure. As shown in Fig. 3, the inversion apparatus includes a ground surface phase determining module 31, a volume scattering decorrelation coefficient determining module 32 and a parameter determining module 33.

The ground surface phase determining module 31 is configured to: acquire a set of PoLInSAR image data of an object to be measured, and perform line fitting, by using total least squares, on a correlation coefficient estimation value acquired from the PoLInSAR image data to determine a ground surface phase estimation value of the object to be measured.

The volume scattering decorrelation coefficient determining module 32 is configured to acquire a volume scattering decorrelation coefficient through a correlation regional boundary acquired from the PoLInSAR image data and a fitted line.

The parameter determining module 33 is configured to perform inversion on the object to be measured by establishing a lookup table to acquire an inversion parameter of the object to be measured as a parameter estimation value of the object to be measured.

Specifically, the ground surface phase determining module 31 may be further configured to: perform line fitting on the correlation coefficient estimation value by using the total least squares to determine a slope estimation value and a slant range estimation value of the fitted line, and determine the ground surface phase estimation value of the object to be measured according to the slope estimation value and the slant range estimation value.

Specifically, the volume scattering decorrelation coefficient determining module 32 may be further configured to:

determine a correlation regional boundary of the master image and the slave image;

determine two intersection points of the fitted line and the correlation regional boundary, and determine one of the two intersection points which is farther away from the ground surface phase of the object to be measured as a volume scattering decorrelation coefficient.

Specifically, the volume scattering decorrelation coefficient determining module 32 may be further configured to:

determine a multiple correlation coefficient of the master images and the slave images, according to a scattering mechanism of the master image and the slave image, the polarimetric cross-correlation matrix of the master image and the slave image, and a correlation matrix of the master image and a correlation matrix of the slave image, and correct the multiple correlation coefficient of the master images and the slave images;

determine a correlation regional boundary through a phase rotation method according to a corrected result of the multiple correlation coefficient.

The parameter determining module 33 may be further configured to: establish an objective function of the object to be measured, according to the scattering mechanism of the master images and the slave images, the polarimetric cross-correlation matrix of the master images and the slave images, the correlation matrix of the master images and the correlation matrix of the slave images, determine extreme values of the objective function through a Lagrange multiplier method, and take the extreme values of the objective function as two intersection points of the fitted line and the correlation regional boundary.

Those skilled in the art should understand that the implementation function of each processing module in the inversion apparatus based on PoLInSAR shown in Fig. 3 can be understood by reference to the above relevant description of an inversion method based on PoLInSAR. Those skilled in the art should understand that functions of each processing unit in the inversion apparatus based on the PoLInSAR shown in Fig. 3 can be implemented through a program running on a processor, also can be implemented through specific logical circuits.

In order to better illustrate the effect of the inversion method of the disclosure, the following will describe the inversion of tree height taken as an example of the object to be measured.

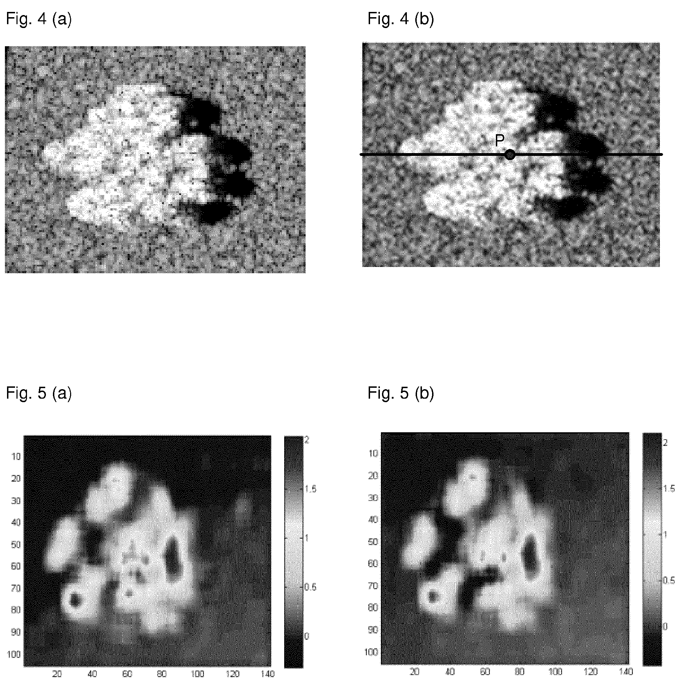

In this embodiment, a set of PoLInSAR image data of L band generated by a PolSARpro software provided by the European Space Agency is adopted to verify the inversion method of the disclosure. Simulation parameters of the PolSARpro software include: a platform height 3000 m, a vertical baseline 1 m, a horizontal baseline 10 m, an incident angle $\pi/2$, a centre frequency 1.3 GHZ, a tree height 18 m, a ground surface being a smooth ground surface phase with phase of about 0, and an image size 105x141 pixels. Fig. 4 (a) is a composite graph of selected Pauli bases, and in Fig. 4 (b), a point marked by a small circle is denoted by P, and the point P is a scenario centre point.

Figs. 5(a) and 5(b) are schematic diagrams of a ground surface phase. Fig. 5 (a) is a schematic diagram of inversion results of the ground surface phase obtained by performing line fitting by using the least squares, and Fig. 5 (b) is a schematic diagram of inversion results of the ground surface phase obtained by performing the line fitting by using the total least squares. Since the ground surface phase is set to be a smooth ground surface phase of about 0 when simulation, from the Figs. 5(a) and 5(b), it can be seen that the ground surface phase obtained by performing the line fitting by using the total least squares is closer to the reality, and the closer to the reality the ground surface phase of an object to be measured is, the higher inversion precision of a forest height obtained ultimately is.

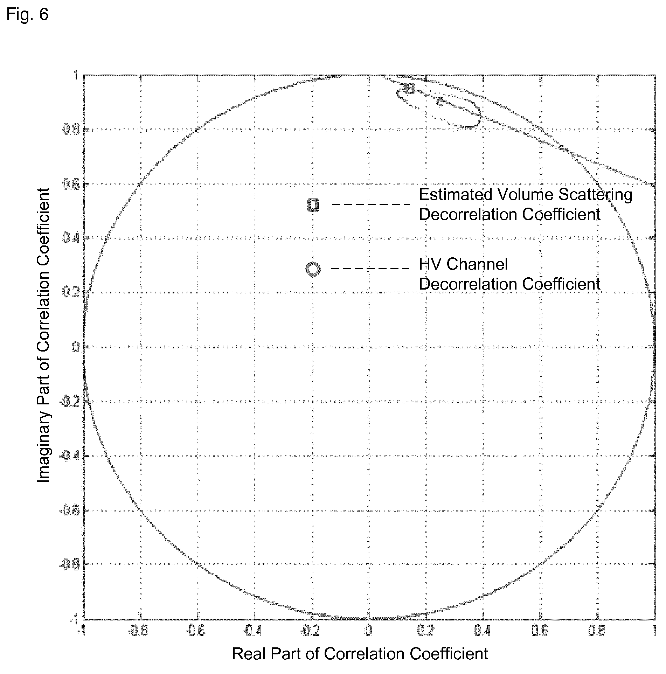

Fig. 6 is a schematic diagram of a correlation line fitted at the scenario centre point P and a volume scattering decorrelation coefficient. In Fig.6, a centre of a small square represents a volume scattering decorrelation coefficient estimated by using the inversion method of the disclosure, and a centre of a small circle represents an HV channel correlation coefficient estimated by using the conventional three-stage inversion method. From the Fig. 6, it can be seen that an estimation value of the volume scattering decorrelation coefficient obtained by using the inversion method of the disclosure is farther from the ground surface phase than the HV channel correlation coefficient value, thus, the inversion method of the disclosure can overcome to some extent the problem of the underestimation of forest height caused by using the conventional three-stage inversion method.

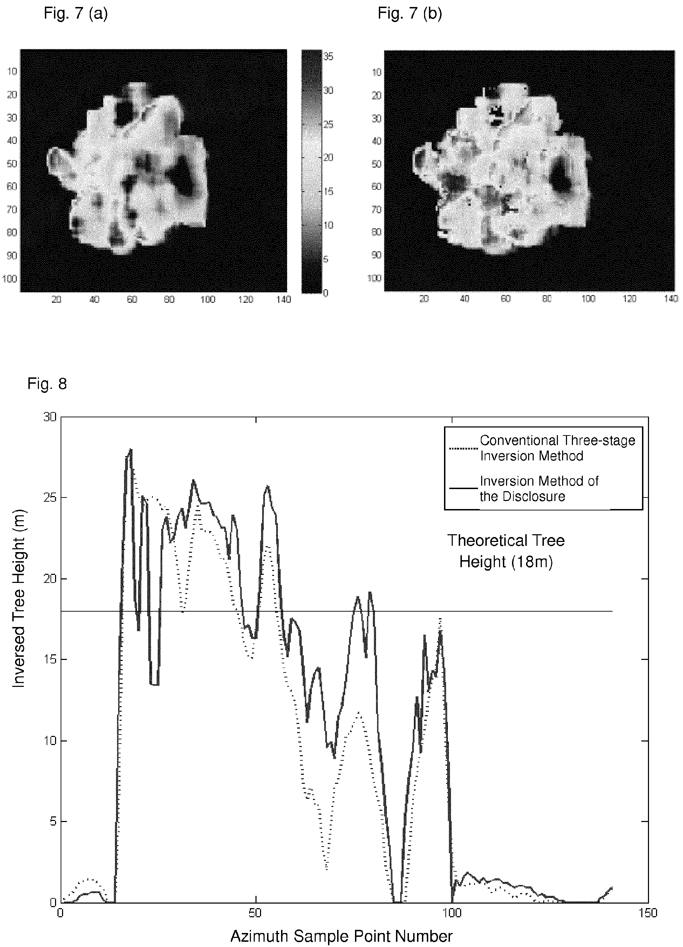

Figs. 7(a) and 7(b) show results of forest height estimation obtained respectively by performing inversion according to the conventional three-stage inversion method and by performing inversion according to the method of the disclosure. Fig. 7 (a) shows an inversion result of the conventional three-stage inversion method, and Fig. 7 (b) shows an inversion result of the inversion method of the disclosure. From the Figs. 7(a) and 7(b), it can be seen that tree height values inversed through the inversion method of the disclosure are uniformly distributed in a forest region, while the tree height inversed by the conventional method has a large number of zero value points in the forest region. Thus, the tree height inversion result obtained through the inversion method of the disclosure is closer to the reality.

In order to verify the feasibility of the inversion method of the disclosure more effectively, the disclosure selects a height inversion result of a scenario azimuth centreline in Fig. 4 (b) to analyze. As shown in Fig. 8, a solid line represents the tree height inversed through the inversion method of the disclosure, an imaginary line represents the tree height inversed through the conventional three-stage inversion method, and a transverse line represents a theoretical tree height. Obviously, it can be seen from the Fig. 8 that the inversion method of the disclosure can overcome to some extent the problem of the underestimation of the tree height caused by using the conventional three-stage inversion method.

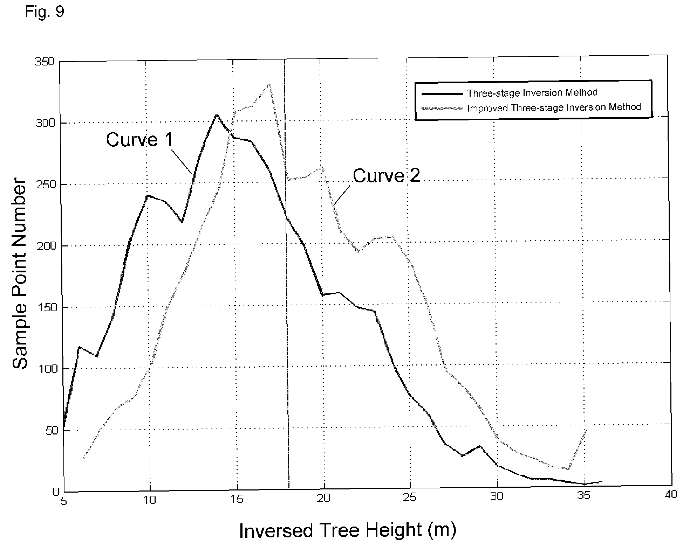

Fig. 9 is a comparison schematic diagram of tree height inversion results of the whole scenario. In Fig. 9, a curve 1 represents the tree height inversion results of the whole scenario obtained by using the inversion method of the disclosure, while a curve 2 represents the tree height inversion results of the whole scenario obtained by using the conventional three-stage inversion method. From the Fig. 9, it can be seen that the conventional three-stage inversion method may cause the underestimation of the tree height, and the distribution of the tree height value inversed through the inversion method of the disclosure is closer to the theoretical height 18 m. Thus, the inversion method of the disclosure is reliable and effective.

For comparing the inversion method of the disclosure with the conventional three-stage inversion method more vividly, a quantitative analysis may be performed on a tree height inversion result. Table 1 shows comparison results of average errors and root-mean-square errors of tree height inversion obtained respectively through the conventional three-stage inversion method and through the inversion method of the disclosure. From the quantitative comparison, it can be seen that the inversion method of the disclosure improves the precision of the tree height inversion.

Table 1

| Theoretical Tree Height 18 (m) | Average Height | Root Mean Square Error | Average Error |
|---|---|---|---|
| Conventional Three-stage Method | 15.59 m | 6.14 m | 5.12 m |
| Inversion Method of the Disclosure | 18.64 m | 5.12 m | 4.96 m |

Experiment results indicate that the method of the disclosure is particularly applicable to the estimation of a forest parameter. In addition, the method of the disclosure is further applicable to application scenarios such as crop parameter estimation.

The above mentioned are only the preferable embodiments of the disclosure, and are not intended to limit the scope of the disclosure.

**Claims**

1. An inversion method based on Polarimetric Interferometric Synthetic Aperture Radar, PoLInSAR, comprising:

   acquiring a set of PoLInSAR image data of an object to be measured, and performing line fitting, by using total least squares, on a correlation coefficient estimation value acquired from the PoLInSAR image data to determine a ground surface phase estimation value of the object to be measured (101);
   acquiring a volume scattering decorrelation coefficient through a correlation regional boundary acquired from the PoLInSAR image data and a fitted line (102); and
   performing inversion on the object to be measured by establishing a lookup table, to acquire an inversion parameter of the object to be measured as a parameter estimation value of the object to be measured (103);

   wherein, the PoLInSAR image data comprises four master images and four slave images.

2. The method according to claim 1, wherein the step of performing line fitting, by using total least squares, on a correlation coefficient estimation value acquired from the PoLInSAR image data to determine a ground surface phase estimation value of the object to be measured comprises:

   performing line fitting on the correlation coefficient estimation value by using the total least squares to determine a slope estimation value and a slant range estimation value of the fitted line, and determining the ground surface phase estimation value of the object to be measured according to the slope estimation value and the slant range estimation value.

3. The method according to claim 1, wherein the step of acquiring a volume scattering decorrelation coefficient through a correlation regional boundary acquired from the PoLInSAR image data and a fitted line comprises:

determining a correlation regional boundary of the master images and the slave images;
determining two intersection points of the fitted line and the correlation regional boundary; and
determining one of the two intersection points which is farther away from the ground surface phase of the object to be measured as a volume scattering decorrelation coefficient.

4. The method according to claim 3, wherein the step of determining a correlation regional boundary of the mains image and the slave images comprises:

determining a multiple correlation coefficient of the master images and the slave images according to a scattering mechanism of the master images and the slave images, a polarimetric cross-correlation matrix of the master images and the slave images, and a correlation matrix of the master images and a correlation matrix of the slave images;
correcting the multiple correlation coefficient; and
determining the correlation regional boundary through a phase rotation method according to a corrected result of the multiple correlation coefficient.

5. The method according to claim 3, wherein the step of determining two intersection points of the fitted line and the correlation regional boundary comprises:

establishing an objective function of the object to be measured, according to a scattering mechanism of the master images and the slave images, a polarimetric cross-correlation matrix of the master images and the slave image, and a correlation matrix of the master images and a correlation matrix of the slave images;
determining extreme values of the objective function through a Lagrange multiplier method; and
taking the extreme values of the objective function as the two intersection points of the fitted line and the correlation regional boundary.

6. An inversion apparatus based on Polarimetric Interferometric Synthetic Aperture Radar, PoLInSAR, comprising a ground surface phase determining module (31), a volume scattering decorrelation coefficient determining module (32) and a parameter determining module (33), wherein the ground surface phase determining module (31) is configured to: acquire a set of PoLInSAR image data of an object to be measured, and perform line fitting, by using total least squares, on a correlation coefficient estimation value acquired from the PoLInSAR image data to determine a ground surface phase estimation value of the object to be measured;
the volume scattering decorrelation coefficient determining module (32) is configured to acquire a volume scattering decorrelation coefficient through a correlation regional boundary acquired from the PoLInSAR image data and a fitted line; and
the parameter determining modules is configured to perform inversion on the object to be measured by establishing a lookup table to acquire an inversion parameter of the object to be measured as a parameter estimation value of the object to be measured.

7. The apparatus according to claim 6, wherein the ground surface phase determining module is further configured to:

perform line fitting on the correlation coefficient estimation value by using the total least squares to determine a slope estimation value and a slant range estimation value of the fitted line; and
determine the ground surface phase estimation value of the object to be measured according to the slope estimation value and the slant range estimation value;

wherein the PoLInSAR image data comprises four master images and four slave images.

8. The apparatus according to claim 6, wherein the volume scattering decorrelation coefficient determining module is further configured to:

determine a correlation regional boundary of the master images and the slave images;
determine two intersection points of the fitted line and the correlation regional boundary; and
determine one of the two intersection points which is farther away from the ground surface phase of the object to be measured as a volume scattering decorrelation coefficient.

9. The apparatus according to claim 6, wherein the volume scattering decorrelation coefficient determining module is further configured to:

determine a multiple correlation coefficient of the master images and the slave images according to a scattering mechanism of the master images and the slave images, a polarimetric cross-correlation matrix of the master images and the slave images, and a correlation matrix of the master images and a correlation matrix of the slave images;
correct the multiple correlation coefficient; and
determine a correlation regional boundary through a phase rotation method according to a corrected result of the multiple correlation coefficient.

**10.** The apparatus according to claim 6, wherein the parameter determining module is further configured to:

establish an objective function of the object to be measured, according to a scattering mechanism of the master images and the slave images, a polarimetric cross-correlation matrix of the master images and the slave images, and a correlation matrix of the master images and a correlation matrix of the slave images;
determine extreme values of the objective function through a Lagrange multiplier method; and
take the extreme values of the objective function as two intersection points of the fitted line and the correlation regional boundary.

**Patentansprüche**

**1.** Umkehrverfahren basierend auf einem polarimetrischen interferometrischen Radar mit synthetischer Apertur, PoLInSAR, welches Folgendes umfasst:

Erfassen eines Satzes von PoLInSAR-Bilddaten eines zu messenden Objektes, und Durchführen einer Linienanpassung, durch Verwendung der totalen kleinsten Quadrate, an einem Korrelationskoeffizienten-Schätzwert, der aus den PoLInSAR-Bilddaten gewonnen wird, zum Bestimmen eines Bodenoberflächenphasen-Schätzwertes des zu messenden Objektes (101);
Erfassen eines Volumenstreuungs-Dekorrelationskoeffizienten durch eine regionale Korrelationsgrenze, die aus den PoLInSAR-Bilddaten und einer angepassten Linie (102) gewonnen wird; und
Durchführen einer Umkehrung an dem zu messenden Objekt durch Erstellung einer Nachschlagetabelle, um einen Umkehrparameter des zu messenden Objektes als einen Parameterschätzwert des zu messenden Objektes (103) zu erhalten;

wobei die PoLInSAR-Bilddaten vier Master-Bilder und vier Slave-Bilder umfassen.

**2.** Verfahren nach Anspruch 1, wobei der Schritt des Durchführens einer Linienanpassung, durch Verwendung der totalen kleinsten Quadrate, an einem Korrelationskoeffizienten-Schätzwert, der aus den PoLInSAR-Bilddaten gewonnen wird, zum Bestimmen eines Bodenoberflächenphasen-Schätzwertes des zu messenden Objektes, Folgendes umfasst:

Durchführen einer Linienanpassung an dem Korrelationskoeffizienten-Schätzwert durch Verwendung der totalen kleinsten Quadrate zum Bestimmen eines Neigungsschätzwertes und eines Schrägentfernungs-Schätzwertes der angepassten Linie, und Bestimmen des Bodenoberflächenphasen-Schätzwertes des zu messenden Objektes gemäß des Neigungsschätzwertes und des Schrägentfernungs-Schätzwertes.

**3.** Verfahren nach Anspruch 1, wobei der Schritt des Erfassens eines Volumenstreuungs-Dekorrelationskoeffizienten durch eine regionale Korrelationsgrenze, die aus den PoLInSAR-Bilddaten und einer angepassten Linie gewonnen wird, Folgendes umfasst:

Bestimmen einer regionalen Korrelationsgrenze der Master-Bilder und der Slave-Bilder;
Bestimmen von zwei Schnittpunkten der angepassten Linie und der regionalen Korrelationsgrenze; und
Bestimmen eines der beiden Schnittpunkte, welcher sich weiter weg von der Bodenoberflächenphase des zu messenden Objektes befindet, als ein Volumenstreuungs-Dekorrelationskoeffizient.

**4.** Verfahren nach Anspruch 3, wobei der Schritt des Bestimmens einer regionalen Korrelationsgrenze der Master-Bilder und der Slave-Bilder Folgendes umfasst:

Bestimmen eines multiplen Korrelationskoeffizienten der Masterbilder und der Slave-Bilder gemäß eines Streuungsmechanismus der Master-Bilder und der Slave-Bilder, einer polarimetrischen Kreuzkorrelationsmatrix der Master-Bilder und der Slave-Bilder, und einer Korrelationsmatrix der Master-Bilder und einer Korrelationsmatrix der Slave-Bilder;

Korrigieren des multiplen Korrelationskoeffizienten; und

Bestimmen der regionalen Korrelationsgrenze durch ein Phasenrotationsverfahren gemäß eines korrigierten Ergebnisses des multiplen Korrelationskoeffizienten.

5. Verfahren nach Anspruch 3, wobei der Schritt des Bestimmens von zwei Schnittpunkten der angepassten Linie und der regionalen Korrelationsgrenze Folgendes umfasst:

Erstellen einer Zielfunktion des zu messenden Objektes gemäß eines Streuungsmechanismus der Master-Bilder und der Slave-Bilder, einer polarimetrischen Kreuzkorrelationsmatrix der Master-Bilder und der Slave-Bilder, und einer Korrelationsmatrix der Master-Bilder und einer Korrelationsmatrix der Slave-Bilder;

Bestimmen von Extremwerten der Zielfunktion durch ein Lagrange-Multiplikator-Verfahren; und

Verwenden der Extremwerte der Zielfunktion als die beiden Schnittpunkte der angepassten Linie und der regionalen Korrelationsgrenze.

6. Umkehrvorrichtung basierend auf einem polarimetrischen interferometrischen Radar mit synthetischer Apertur, PoLInSAR, welche ein Bodenoberflächenphasen-Bestimmungsmodul (31), ein Volumenstreuungs-Dekorrelationskoeffizienten-Bestimmungsmodul (32) und ein Parameterbestimmungsmodul (33) umfasst, wobei das Bodenoberflächenphasen-Bestimmungsmodul (31) zu Folgendem konfiguriert ist:

Erfassen eines Satzes von PoLInSAR-Bilddaten eines zu messenden Objektes, und Durchführen einer Linienanpassung, durch Verwendung der totalen kleinsten Quadrate, an einem Korrelationskoeffizienten-Schätzwert, der aus den PoLInSAR-Bilddaten gewonnen wird, zum Bestimmen eines Bodenoberflächenphasen-Schätzwertes des zu messenden Objektes;

das Volumenstreuungs-Dekorrelationskoeffizienten-Bestimmungsmodul (32) zu Folgendem konfiguriert ist:

Erfassen eines Volumenstreuungs-Dekorrelationskoeffizienten durch eine regionale Korrelationsgrenze, die aus den PoLInSAR-Bilddaten und einer angepassten Linie gewonnen wird; und

das Parameterbestimmungsmodul (33) konfiguriert ist zum Durchführen einer Umkehrung an dem zu messenden Objekt durch Erstellung einer Nachschlagetabelle, um einen Umkehrparameter des zu messenden Objektes als einen Parameterschätzwert des zu messenden Objektes zu erhalten.

7. Vorrichtung nach Anspruch 6, wobei das Bodenoberflächenphasen-Bestimmungsmodul ferner zu Folgendem konfiguriert ist:

Durchführen einer Linienanpassung an dem Korrelationskoeffizienten-Schätzwert durch Verwendung der totalen kleinsten Quadrate zum Bestimmen eines Neigungsschätzwertes und eines Schrägentfernungs-Schätzwertes der angepassten Linie; und

Bestimmen des Bodenoberflächenphasen-Schätzwertes des zu messenden Objektes gemäß des Neigungsschätzwertes und des Schrägentfernungs-Schätzwertes;

wobei die PoLInSAR-Bilddaten vier Master-Bilder und vier Slave-Bilder umfassen.

8. Vorrichtung nach Anspruch 6, wobei das Volumenstreuungs-Dekorrelationskoeffizient-Bestimmungsmodul ferner zu Folgendem konfiguriert ist:

Bestimmen einer regionalen Korrelationsgrenze der Master-Bilder und der Slave-Bilder;

Bestimmen von zwei Schnittpunkten der angepassten Linie und der regionalen Korrelationsgrenze; und

Bestimmen eines der beiden Schnittpunkte, welcher sich weiter weg von der Bodenoberflächenphase des zu messenden Objektes befindet, als ein Volumenstreuungs-Dekorrelationskoeffizient.

9. Vorrichtung nach Anspruch 6, wobei das Volumenstreuungs-Dekorrelationskoeffizienten-Bestimmungsmodul ferner zu Folgendem konfiguriert ist:

Bestimmen eines multiplen Korrelationskoeffizienten der Masterbilder und der Slave-Bilder gemäß eines Streuungsmechanismus der Master-Bilder und der Slave-Bilder, einer polarimetrischen Kreuzkorrelationsmatrix der Master-Bilder und der Slave-Bilder, und einer Korrelationsmatrix der Master-Bilder und einer Korrelationsmatrix der Slave-Bilder;
Korrigieren des multiplen Korrelationskoeffizienten; und
Bestimmen der regionalen Korrelationsgrenze durch ein Phasenrotationsverfahren gemäß eines korrigierten Ergebnisses des multiplen Korrelationskoeffizienten.

**10.** Vorrichtung nach Anspruch 6, wobei das Parameterbestimmungsmodul ferner zu Folgendem konfiguriert ist:

Erstellen einer Zielfunktion des zu messenden Objektes gemäß eines Streuungsmechanismus der Master-Bilder und der Slave-Bilder, einer polarimetrischen Kreuzkorrelationsmatrix der Master-Bilder und der Slave-Bilder, und einer Korrelationsmatrix der Master-Bilder und einer Korrelationsmatrix der Slave-Bilder;
Bestimmen von Extremwerten der Zielfunktion durch ein Lagrange-Multiplikator-Verfahren; und
Verwenden der Extremwerte der Zielfunktion als die beiden Schnittpunkte der angepassten Linie und der regionalen Korrelationsgrenze.

## Revendications

**1.** Procédé d'inversion basé sur un radar à ouverture synthétique interférométrique polarimétrique, PoLInSAR, comprenant de :

acquérir un ensemble de données d'image PoLInSAR d'un objet à mesurer et effectuer un ajustement de lignes, en utilisant des moindres carrés totaux, sur une valeur d'estimation de coefficient de corrélation acquise d'après les données d'image PoLInSAR pour déterminer une valeur d'estimation de phase de surface au sol de l'objet à mesurer (101) ;
acquérir un coefficient de de décorrélation de diffusion dans le volume à travers une frontière régionale de corrélation acquise d'après les données d'image PoLInSAR et une ligne ajustée (102) ; et
effectuer une inversion sur l'objet à mesurer en établissant une table de recherche, afin d'acquérir un paramètre d'inversion de l'objet à mesurer comme une valeur d'estimation de paramètre de l'objet à mesurer (103) ;

dans lequel les données d'images PoLInSAR comprennent quatre images maîtres et quatre images esclaves.

**2.** Procédé selon la revendication 1, dans lequel l'étape consistant à effectuer un ajustement de lignes, en utilisant des moindres carrés totaux, sur une valeur d'estimation de coefficient de corrélation acquis d'après les données d'image PoLInSAR pour déterminer une valeur d'estimation de phase de surface au sol de l'objet à mesurer comprend de :

effectuer un ajustement de ligne sur la valeur d'estimation de coefficient de corrélation en utilisant les moindres carrés totaux pour déterminer une valeur d'estimation de pente et une valeur d'estimation de distance oblique de la ligne ajustée, et déterminer la valeur d'estimation de phase de surface au sol de l'objet à mesurer selon la valeur d'estimation de pente et la valeur d'estimation de distance oblique.

**3.** Procédé selon la revendication 1, dans lequel l'étape d'acquisition d'un coefficient de décorrélation de diffusion dans le volume à travers une frontière régionale de corrélation acquise d'après les données d'image PoLInSAR et une ligne ajustée comprend de :

déterminer une frontière régionale de corrélation des images maîtres et des images esclaves ;
déterminer deux points d'intersection de la ligne ajustée et de la frontière régionale de corrélation ; et
déterminer un des deux points d'intersection qui est plus éloigné de la phase de surface au sol de l'objet à mesurer comme un coefficient de décorrélation de diffusion dans le volume.

**4.** Procédé selon la revendication 3, dans lequel l'étape de détermination d'une frontière régionale de corrélation des images maîtres et des images esclaves comprend de :

déterminer un coefficient de corrélation multiple des images maîtres et des images esclaves selon un mécanisme de diffusion des images maîtres et des images esclaves, une matrice de corrélation croisée polarimétrique des images maîtres et des images esclaves, et une matrice de corrélation des images maîtres et une matrice de corrélation des images esclaves ;
corriger le coefficient de corrélation multiple ; et déterminer la frontière régionale de corrélation par l'intermédiaire d'un procédé de rotation de phase selon un résultat corrigé du coefficient de corrélation multiple.

5. Procédé selon la revendication 3, dans lequel l'étape de détermination de deux points d'intersection de la ligne ajustée et la frontière régionale de corrélation comprend de :

établir une fonction objective de l'objet à mesurer, selon un mécanisme de diffusion des images maîtres et des images esclaves, et une matrice de corrélation des images maîtres et une matrice de corrélation des images esclaves ;
déterminer des valeurs extrêmes de la fonction objective par l'intermédiaire d'un procédé de multiplicateur Lagrange ; et
prendre les valeurs extrêmes de la fonction objective comme les deux points d'intersection de la ligne ajustée et la frontière régionale de corrélation.

6. Dispositif d'inversion basé sur un radar à ouverture synthétique interférométrique polarimétrique, PoLInSAR, comprenant un moule de détermination de phase de surface au sol (31), un module de détermination de coefficient de décorrélation de diffusion dans le volume (32) et un module de détermination de paramètre (33), dans lequel le module de détermination de phase de surface au sol (31) est configuré pour :

acquérir un ensemble de données d'image PoLInSAR d'un objet à mesurer et effectuer un ajustement de lignes, en utilisant des moindres carrés totaux, sur une valeur d'estimation de coefficient de corrélation acquise d'après les données d'image PoLInSAR pour déterminer une valeur d'estimation de phase de surface au sol de l'objet à mesurer ;
le module de détermination de coefficient de décorrélation de diffusion dans le volume (32) est configuré pour acquérir un coefficient de décorrélation de diffusion dans le volume à travers une frontière régionale de corrélation acquise d'après les données d'image PoLInSAR et une ligne ajustée; et
le module de détermination de paramètre (33) est configuré pour effectuer une inversion sur l'objet à mesurer en établissant une table de recherche, afin d'acquérir un paramètre d'inversion de l'objet à mesurer comme une valeur d'estimation de paramètre de l'objet à mesurer.

7. Dispositif selon la revendication 6, dans lequel le module de détermination de phase de surface au sol est en outre configuré pour :

effectuer un ajustement de ligne sur la valeur d'estimation de coefficient de corrélation en utilisant les moindres carrés totaux pour déterminer une valeur d'estimation de pente et une valeur d'estimation de distance oblique de la ligne ajustée ;et
déterminer la valeur d'estimation de phase de surface au sol de l'objet à mesurer selon la valeur d'estimation de pente et la valeur d'estimation de distance oblique ;

dans lequel les données d'image PoLInSAR comprennent quatre images maîtres et quatre images esclaves.

8. Dispositif selon la revendication 6, dans lequel le module de détermination de coefficient de décorrélation de diffusion dans le volume est en outre configuré pour :

déterminer une frontière régionale de corrélation des images maîtres et des images esclaves ;
déterminer deux points d'intersection de la ligne ajustée et de la frontière régionale de corrélation ; et
déterminer un des deux points d'intersection qui est plus éloigné de la phase de surface au sol de l'objet à mesurer comme un coefficient de décorrélation de diffusion dans le volume.

9. Dispositif selon la revendication 6, dans lequel le module de détermination de coefficient de décorrélation de diffusion dans le volume est en outre configuré pour :

déterminer un coefficient de corrélation multiple des images maîtres et des images esclaves selon un mécanisme de diffusion des images maîtres et des images esclaves, une matrice de corrélation croisée polarimétrique des images maîtres et des images esclaves, et une matrice de corrélation des images maîtres et une matrice de corrélation des images esclaves ;
corriger le coefficient de corrélation multiple ; et

déterminer la frontière régionale de corrélation par l'intermédiaire d'un procédé de rotation de phase selon un résultat corrigé du coefficient de corrélation multiple.

10. Dispositif selon la revendication 6, dans lequel le module de détermination de paramètre est en outre configuré pour :

établir une fonction objective de l'objet à mesurer, selon un mécanisme de diffusion des images maîtres et des images esclaves, et une matrice de corrélation des images maîtres et une matrice de corrélation des images esclaves ;
déterminer des valeurs extrêmes de la fonction objective par l'intermédiaire d'un procédé de multiplicateur Lagrange ; et
prendre les valeurs extrêmes de la fonction objective comme les deux points d'intersection de la ligne ajustée et la frontière régionale de corrélation.

Fig. 1

| | |
|---|---|
| A set of PoLInSAR image data of an object to be measured is acquired, and line fitting is performed, by using total least squares, on a correlation coefficient estimation value acquired from the PoLInSAR image data to determine a ground surface phase estimation value of the object to be measured | 101 |

| | |
|---|---|
| A volume scattering decorrelation coefficient is acquired through a correlation regional boundary acquired from the PoLInSAR image data and a fitted line | 102 |

| | |
|---|---|
| Inversion is performed on the object to be measured by establishing a lookup table to acquire an inversion parameter of the object to be measured as a parameter estimation value of the object to be measured | 103 |

Fig. 2

Fig. 3

Fig. 4 (a)

Fig. 4 (b)

Fig. 5 (a)

Fig. 5 (b)

Fig. 6

Fig. 7 (a)

Fig. 7 (b)

Fig. 8

Azimuth Sample Point Number

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LULU TAN et al.** Improved three-stage inversion process for forest height inversion with PolInSAR data. *RADAR (RADAR), 2011 IEEE CIE INTERNATIONAL CONFERENCE ON, IEEE,* 24 October 2011, 1394-1397